# EUROPEAN PATENT APPLICATION

(11) **EP 1 197 856 A2**
(43) Date of publication of application: **17.04.2002**
(21) Application number: 01119968.4
(22) Date of filing: 18.08.2001
(51) Int. Cl.: G06F 9/46

(54) **Guaranteed end-to-end transaction execution in a client/server environment**

(30) Priority: 16.09.2000 EP 00120362
(71) Applicant: International Business Machines Corporation, Armonk, NY 10504 (US)
(72) Inventor: Eibach, Wolfgang, 71088 Holzgerlingen (DE); Kübler, Dietmar, 71093 Weil im Schönbuch (DE)
(74) Representative: Kauffmann, Wolfgang Christian

(57) **Abstract**

Disclosed is a client/server-based transaction system which comprises a client workstation (300) and a transaction server (310). The client workstation (300) has an application program (320) not having any transaction management resources. The client comprises a transaction interface (325). The transaction server provides an input queue (330), an output queue (340) and a control queue (350). The control queue (350) resides on the transaction server. Start of a transaction (355), depicted as the dotted line, activates the transaction interface which initiates a data flow to the control queue and stores a unique session information. The data flow to the input queue stores a request to the transaction server. The completion of the transaction is signalled by a response in the output queue. The client retrieves this response, and deletes the control queue information in a same Unit of Work. In case the application program crashes before the transaction is completed, the session information in the control queue is used for recovery processing.

## Description

### BACKGROUND OF THE INVENTION

The present invention generally relates to client/server-based transaction processing environments and more specifically to the execution of transactions in such a client/server environment with clients having only limited transaction processing resources.

In a computer network, the client/server model provides a convenient way to interconnect programs that are distributed efficiently across different locations. Computer transactions using the client/server model are very common. For example, when a user checks his bank account from a personal computer, a client program running on the personal computer forwards his request to a server program at the bank. That program may in turn forward the request to its own client program that sends a request to a database server at another bank computer to retrieve the account balance. The balance is returned back to the bank's client program, which in turn serves it back to the client program in the personal computer, which displays the information for the user.

Most of the above mentioned and other business applications being developed today use the client/server model. In a usual client/server transaction process, a server is activated and awaits client requests. Typically, multiple client programs share the services of a common server program. Both the client programs and the server programs are often part of a larger program or application. As clients, application programs using the Transmission Control Protocol/Internet Protocol (TCP/IP) as the basic communication language or protocol are used increasingly.

For example, a Web browser is a commonly used client program that requests services like the the sending of Web pages or files from a Web server by means of a Hypertext Transport (or Transfer) Protocol (HTTP) server in another computer located elsewhere on the Internet. Similarly, a computer with TCP/IP installed allows to make client requests for files from File Transfer Protocol (FTP) servers in other computers on the Internet.

A matter of the utmost concern in transaction processing is the requirement of a sophisticated transaction consistency level for sensitive transactions e.g. in the above mentioned transaction scenario in the field of banking services. In terms of that level it must be guaranteed that e.g. a financial transaction is either performed to each involved resource without error and only once, or, in case of an error on one resource, all changes must be completely rolled back.

Known transaction processing (TP) systems, for that purpose, use a Commit/Rollback mechanism to control transactions. It is noted hereby that a transaction, in the present context, is understood as a sequence of one or more data processing activities which affect resources, i.e. any hardware or software in an underlying client/server-based computer environment like transaction applications or processors. In particular, a so-called two-phase commit (2P-C) protocol is executed where it is checked whether the transaction is complete and consistent and, if so, committed and executed. If the transaction fails during execution, a transaction rollback is performed in order to undo the already performed operations. This guarantees a consistent behaviour of the client/server computing system and thus avoids undefined status.

A particular problem of TP systems is abnormal shutdown or termination of a client or server involved in a pending transaction or any other abnormal disconnection between a client and a server. In such situations, use of the above mentioned 2P-C protocol guarantees a secure way to resolve even those situations.

Beyond the predescribed TP systems, there exist other approaches for handling transactions in a temporarily disconnected client/server system. As a first approach, U.S. Pat. No. 5,740,432 describes a client/server computing system, where client entries are stored in a log file during time periods when the client is disconnected from the server. An encoding module utilizes the log file together with a write file table for logging the write operations performed by the client during disconnected operations. Upon reconnection of the client to the server, a decoding module replays the events in the correct chronological order by transferring the file data modified during the period of disconnection in then order dictated by the write file table.

Thereupon, U.S. Pat. No. 5,774,717 discloses a method for resynchronizing a client/server file system and, in particular, for resolving file system conflicts in such a system after the client file system has been ordinarily disconnected from the server file system. During disconnected operation, the client logs each file system transaction in a transaction log. The types of transactions are common file system commands like 'CreateFile' or 'MakeDirectory'. Changes to the client file system are replayed for application to the server file system. Conflicts between the proposed changes and the current state of the server file system are detected and actions conditioned on the conflict type are presented by a dedicated graphical user interface (GUI) to a user for selection. User selection and conflict type are used to determine the conflict resolution to apply to the client data during application wherein all conflicts are resolved as they are detected. Resynchronization is accomplished via replay processing of the file system transaction log. During replay, each transaction is compared to the server file system to determine what action is required and whether or not that action conflicts with the current state of the server file system. The resynchronization process is controllable by the user by means of the GUI.

The above described TP systems require a local Resource Manager or Transaction Coordinator instance for each client and thus have in common the drawback that thin clients not having those managers or instances like Internet browsers or similar end-user applications can not participate in or use the 2P-C protocol and in case of a failed transaction, in particular due to a temporary shutdown of the client, will not be able to rollback an already started transaction or even know the status of an already started transaction. It is noted that "thin clients" as understood in the present context are any application programs with the above mentioned limited data or transaction processing resources or any network or personal computers for private or business use that are designed to be centrally-managed, configured with only essential equipment and, for instance, are devoid of CD-ROM players, diskette drives, and expansion slots and therefore be lower in cost. These thin clients are often designated "Net(work) PCs".

### SUMMARY OF THE INVENTION

It is therefore an object of the present invention to provide a method and a system which allow for an improved transaction processing, in particular a transaction processing with a higher consistency level than the above discussed prior art approaches.

It is another object to provide consistent transaction processing also in cases of abnormal termination of a client or server in a client/server environment.

Another object is to provide a consistent transaction processing or transaction failure handling, respectively, also in case of client/server environments where a client does not have any transaction managing resources.

It is yet another object to provide such a method and system which can be implemented in an existing client/server transaction processing environment with minimum technical efforts and thus minimum cost-extensively.

The invention solves these objects by providing a transaction mechanism and a corresponding transaction system which allow for an end-to-end guaranteed transaction issued from a client, in particular a thin client, to a server. The underlying concept is to have the transaction controlled by the client (user) which initiated the transaction and providing transaction status information to the client therefore providing a guaranteed end-to-end transaction behaviour.

The invention particularly provides, on the server side, a control queue for storing current state information of a pending transaction using a unique identifier for the client. On the client side, means are provided for setting up a connection to the control queue in case of starting a transaction and for quering the control queue for any previous transactions with the same unique identifier.

The invention advantageously can use standard transactional systems on the server side, and extends their capabilities to cover also the client side.

### BRIEF DESCRIPTION OF THE DRAWINGS

The invention will be understood more readily from the following detailed description when taken in conjunction with the accompanying drawings, in which:
- Fig. 1: is a block diagram illustrating a transaction processing model according to the prior art;
- Fig. 2: is a block diagram depicting a client/server transaction system according to the invention;
- Fig. 3: is a combined block and flow diagram showing a normally processed transaction event according to the invention;
- Fig. 4: is a combined block and flow diagram showing the recovery of a transaction after a previous crash of the client;
- Fig. 5: depicts a preferred embodiment of the proposed control queue;
- Fig. 6: depicts exemplary pseudo code of a normal processing of the transaction mechanism proposed by the invention; and
- Fig. 7: depicts a pseudo code example for start of a client application according to the proposed transaction mechanism.

### DETAILED DESCRIPTION OF A PREFERRED EMBODIMENT OF THE INVENTION

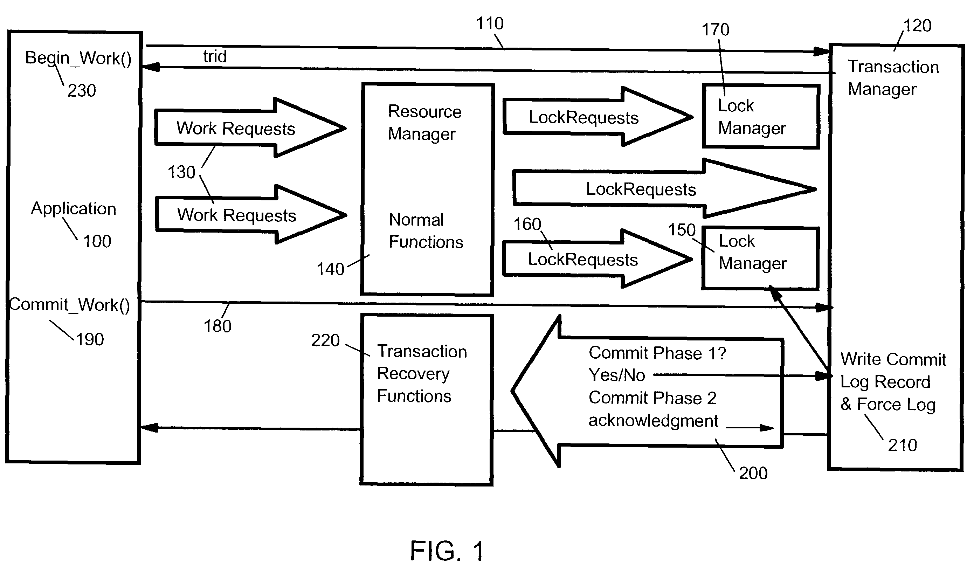

Fig. 1 illustrates the well-known X/Open transaction processing model. In a transaction processing (TP) environment or system, once an application 100 has started a transaction, at first the transaction is registered 110 with a transaction manager 120 handling the transaction. Thereafter the application 100 usually invokes 130 one or more resource managers 140 which perform work on resources on behalf of the transaction. The resource managers 140, in particular, keep lists of changes they have made to objects contained in the resources. The TP system for this provides a logging service to record these changes. A log manager 150 implements a sequential file of all the updates of transactions to objects wherein the resource managers 140 inform 160 the log manager 150 what these updates are.

In order to prevent other transactions from gathering uncommitted updates of a particular transaction and to prevent them from altering the data read or written by the uncommitted transaction, the objects accessed by the particular transaction have to be locked. The TP system therefore provides a lock manager 170 that can be used also by the other resource managers.

When the transaction issues 180 a Commit_Work() protocol command 190, the transaction manager 120 performs a two-phase commit (2P-C) protocol 200. First, it queries all resource managers 140 that joined the transaction, asking if they think that the transaction is a consistent and complete transformation. Hereby, the transaction manager 120 and the resource managers 140 provide the following ACID operations on the objects they implement. According to the ACID convention, a transaction must have the four following properties: Atomicity (i.e. state changes happen or not happen), Consistency (only correct state transformations), Isolation (it has to be ensured that though concurrent processing of transactions, objects read by a transaction are isolated from object updates of concurrent transactions) and Durability (after execution of a Commit_Work() all state transformations are made durable and public). For the further details of the ACID requirements it is referred to Jim Gray and Andreas Reuter in "Transaction Processing: Concepts and Techniques", particularly chapters 1.2.3.2 to 1.2.4.

If any resource manager 140 votes 'NO', the commit fails, but if all the resource managers 140 vote 'YES', then the transaction is a correct transformation and the transaction manager 120 records 210 this fact in the log, informing each resource manager 140 that the transaction is complete and may be releasing existing locks.

The role of the above described absolutely necessary core services, i.e. transaction manager, log manager and lock manager, in the execution of a transaction is particularly depicted in Fig. 1.

On the other hand, if the transaction fails during execution, or if a resource manager 140 votes 'NO' during phase one of the 2P-C protocol, then the transaction manager 120 initiates transaction rollback, reads the transaction's log and, for each log record, invokes the resource manager 140 that wrote the record, asking the resource manager 140 to undo the operation. Then the transaction manager 120 informs each resource manager 140 that joined the transaction that the transaction is aborted.

Thereupon, the transaction manager 120 handles transaction recovery 220 if a node or site in the client/server environment fails. If a site fails, the TP system restarts all the resource managers 140. Several transactions may have been in progress at the time of failure. The resource managers 140 contact the transaction manager 120 as part of their restart logic and informs them of the outcome of each transaction that was active at the time of the failure. Some may have committed, some may have aborted, and some may still be in the process of committing. The resource managers 140 can recover their committed states independently, or they can participate in the transaction manager's 120 undo and redo procedures.

The application program 100 declares the start of a new transaction by invoking a routine called Begin_Work() 230 which, according to the above cited 2P-C protocol 200, typically consists of the following program steps:

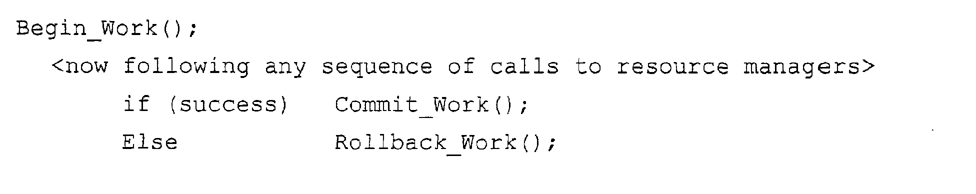

In other words, the programmer brackets the successful execution of the program with a Begin-Commit pair and brackets a failed execution with a Begin-Rollback pair.

The program further declares the transaction to be complete and correct by invoking the routine called Commit_Work() 190. Once the transaction successfully commits, the transactions's effects are durable. If something goes wrong during the transaction, the application can undo all the operations by invoking a routine called Rollback_Work(). If there is a failure during the transaction's execution, the system can unilaterally cause the transaction to be rolled back.

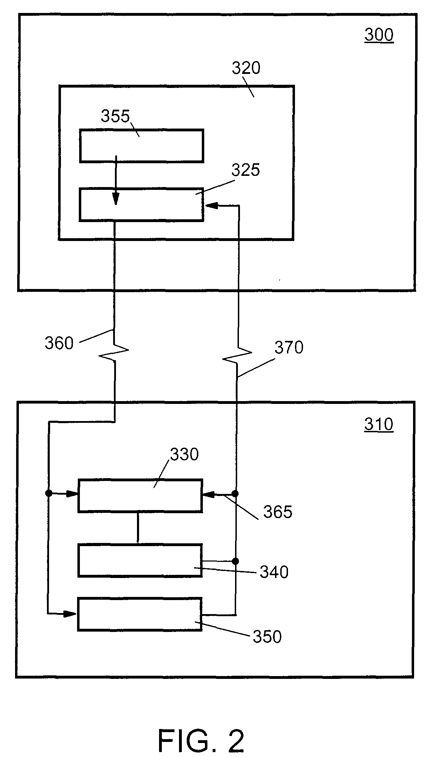

Now referring to Fig. 2, the basic structure of a client/server-based transaction system according to the invention is described. The system comprises a client workstation 300 and a transaction server 310. On the client workstation 300 installed is an application program 320, e.g. a Web browser or the like, which does not have any transaction management resources. It only comprises a transaction interface (program) 325 which can be part of the client application program 320, as in the present embodiment, or a separate piece of software or hardware. The transaction server 310 comprises an input queue 330, an output queue 340 and a control queue 350. The control queue 350 typically resides on the transaction server 310 but can also be implemented on another system hardware within the client/server environment. Start of a transaction 355, which is symbolically depicted as the dotted line, at first activates the transaction interface 325 which, in parallel to a transaction data flow to the input queue 330, initiates a data flow to the control queue 350 also via connection line 360. The data flow to the Control queue stores a unique session information to this queue. The data flow to the input queue stores a request to the transaction server. The transaction server guarantees that both messages are made available to the transaction server by a single commit command. The completion of the transaction is signalled by a response in the server output queue. The client retrieves this response, and deletes the control queue information in a same Unit of Work (UOW). In case the application program 320 crashes before the transaction 355 is completed, the session information in the control queue is used for recovery processing.

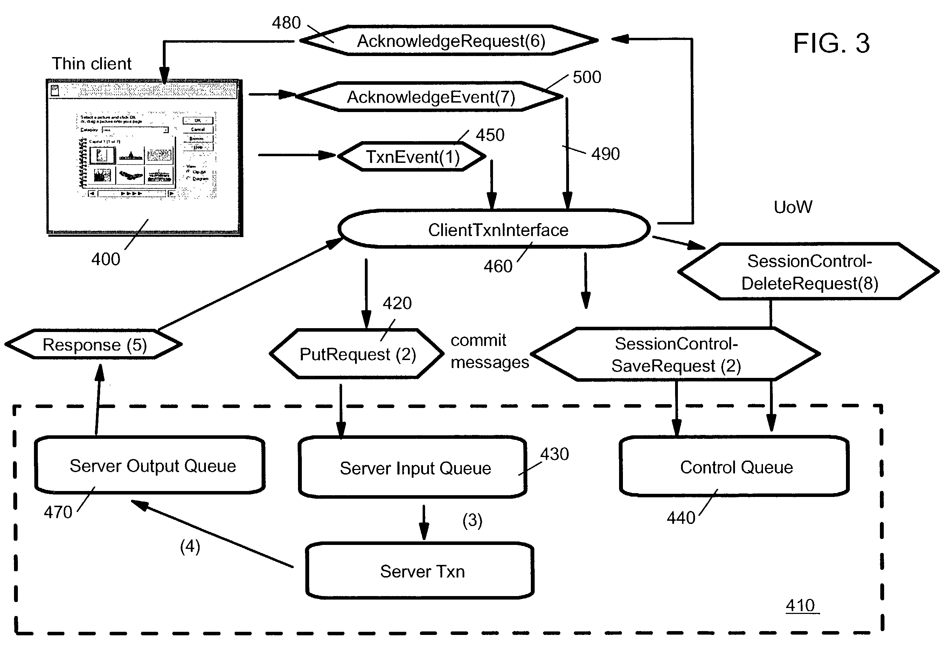

A more detailed event and data flow of the client/server system shown in Fig. 2 is now described with reference to the combined block and flow diagram depicted in Fig. 3 which shows a normally processed transaction event i.e. a sequence of events for the case of a transaction to be processed without any termination of the client. When the user at the client workstation ('300' in Fig. 2) using a thin client 400 in the above sense initiates the transaction to the server 410 ('310' in Fig.2), a request message 420 is sent to the input queue 430 of the server 410.

An underlying messaging system (not shown here), in this example MQSeries of the present applicant, allows for Commit/Rollback handling of the processed transactions. The transactions are grouped together in the UOW. If all actions of a UOW are performed correctly, a Commit is issued, which makes all changes to the involved resources permanent. If any of the actions to a resource failed, a Rollback command is issued which will undo all actions and changes made to all resources involved in the UOW. This guarantees a consistent behaviour of a data processing system, and avoids undefined status.

The client 400 sends in the same UOW a message to the Control Queue 440, which indicates the fact that a request has been issued, and saves session information which includes the unique Message ID of the request message. Now the client transaction interface 460 issues a Commit, which commits both messages and makes them available for processing by the server 410. The client transaction interface 460 will now wait for the response message from the server 410, which is put into a common response queue located at the server side and used by all attached clients.

The detailed processing steps of the above shown transaction are as follows. First a TxnEvent 450 (Transaction event) is initiated by the user. This will lock his application window, in particular due to the Atomicity requirement of the ACID convention. The client TxnInterface 460 issues a PutRequest 420 to the Server Input Queue 430. It puts the session information, created in the latter step, to the Control Queue 440 located at the server 410. Both messages are then committed by a single command. Now the server 410 executes the transaction. When the transaction is completed, the server 410 puts the response to the Output Queue 470. With the saved Message ID, the ClientTxnInterface program 460 receives the response. An Acknowledge request 480 is passed to the application window of the user. The user acknowledges the transaction with a mouse click, which transmits 490 an Acknowledge Event 500 to the ClientTxnInterface 460. This user interaction is configurable. The ClientTxnInterface program 460 deletes the message in the Control Queue 440 and commits both activities.

The TP system described in Figs 2 and 3 therefore allows to control a UOW from clients without having local transaction managing resources. It extends the scope of a transaction also to client systems which do not have installed a Resource Manager or a Transaction Coordinator. Without this extension, a transaction started from a client system to be performed on a server may cause undefined behaviour if the connection breaks before the client has received the acknowledgement for its request. The user of the client who initiated the transaction will not know if the transaction has been performed correctly on the server or not. This may force him to redo the same transaction when the connection to the server is up again, which will cause the transaction to be performed twice on the server.

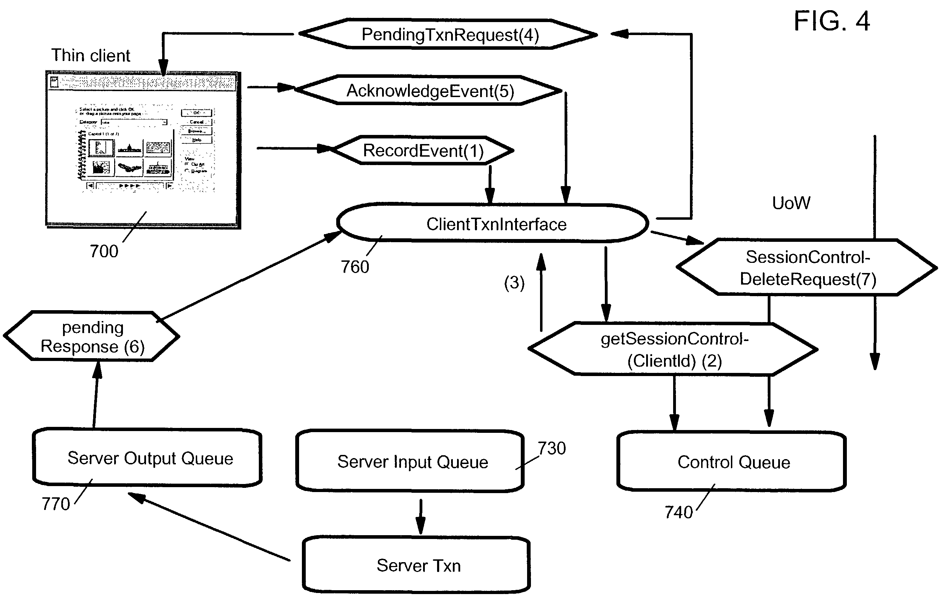

In the following it is described how the proposed transaction protocol is handling a situation where the client crashes while waiting for the response message from the server. Fig. 4 shows the handling of this situation. When the client application starts, the server may have completed its work, and has put the response message to the response queue. But the client has now lost the information of the original Message ID, and therefore cannot get this information. At restart of the application, the ClientTxnInterface 760 program will check the Control queue 740, and will find there the information about the pending transaction, its session information and the value of the original Message ID. With this information, the response will be get from the response queue 770, and the transaction can be completed as described above for the good case.

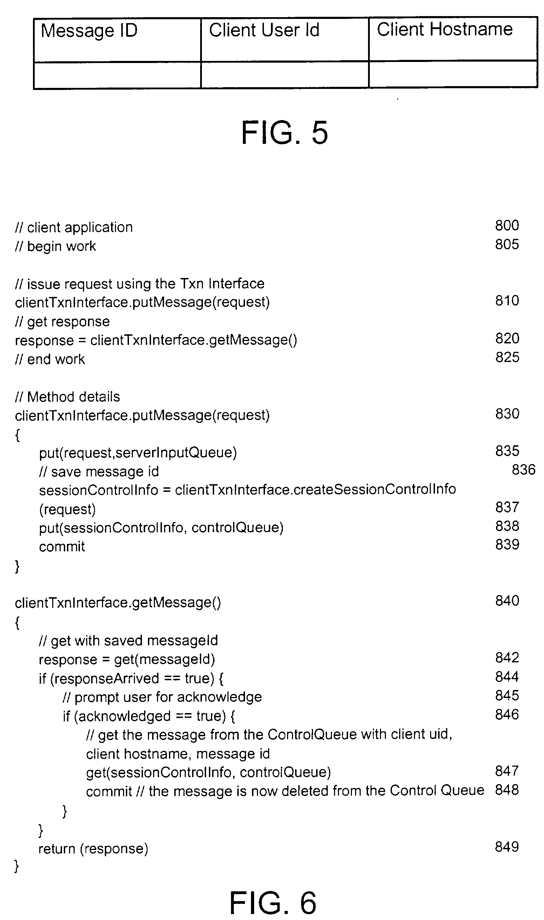

Fig. 5 shows a preferred embodiment of the control queue proposed by the invention and in particularly depicts a SessionControlInfo for the control queue. The SessionControlInfo comprises the necessary information to find previously stored SessionControlInfo from clients and unique identification needed to retrieve the response from the actual transaction. The following three attributes are used:
- A Message ID;
- a network unique, for each new message generated identifier used as a correlation to the corresponding response message of the transaction Client User ID;
- a Client Hostname used to identify the user and client which has issued the transaction.

Fig. 6 depicts a Pseudo Code example illustrating a normal processing of the transaction mechanism according to the invention. It is assumed that a client application 800 has assembled a request and sends it to a server. A UOW begins 805 before using the clientTxnInterface method putMessage(request) 810. The method 810 is described in detail in 830. A method put(request, serverInputQueue) 835 illustrates that the request is sent to the Server Input Queue. A unique message identifier of the request is saved 836 for later correlation with the response.

A session control information (messageId, userId, hostname) is created by a method CreateSessionControlInfo(request) 837 and passed to the Control Queue in 838. Both messages are made visible to the server with the commit in 839. The client application 800 uses the getMessage method 810 to wait and retrieve the response from the server. The details of 810 start in 840. The saved message Id is used to correlate the correct response from the server to the client when issuing the get(messageId) 842 method. In case of succesfull receiving the response 844 the user is prompted 845 for acknowledge. When acknowledged 846, the message containing the session control information is retrieved from the control queue 847 using the respective information. The completion of the transaction is made final when the commit 848 deletes the message from the control queue and the response from the server input queue. In 849 the response is passed to 820 and the UOW ends 825.

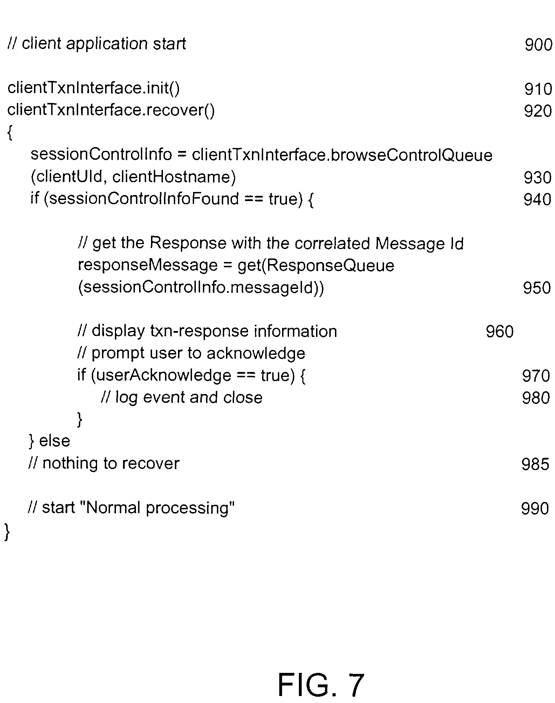

Finally, Fig. 7 depicts a Pseudo code example for start of a client application. When the client application starts 900 it performs initializing work 910 like connecting to a server and the like. It calls a recovery method 920 which in detail performs the following steps: The Control Queue is browsed with the client User ID and the Hostname 930 in order to find possible pending transaction control information. If this is the case 940, a Message ID from the found session information is used to actually retrieve the pending response 950 from the server response queue. The transaction response information is displayed 960 to the user who acknowledges 970 and the event is logged 980 e.g. for auditing purposes. If no session control information for this particual client is found, nothing has to be done 985. After this step the "Normal processing" 990 as described earlier is starting again.

## Claims

1. A client/server-based data processing system for performing transactions between at least one client not having any transaction managing resources and a server having first data storage means for storing transaction requests received from the client, comprising
on the server side, at least second storage means for storing current state information of a pending transaction using a unique identifier for the at least one client, and
on the client side, processing means for setting up a connection to the at least second storage means in case of starting a transaction and quering the second storage means for any previous transactions with the same unique identifier.

2. System according to claim 1, wherein the at least second storage means is a control queue capable of storing information at least related to message identification information.

3. System according to claim 2, wherein the control queue is further capable of storing User ID information and/or Client Host Information.

4. System according to any of claims 1 to 3, wherein the at least second storage means continuously stores current state information of a pending transaction.

5. System according to any of claims 1 to 4, wherein the at least second storage means is an address area of a data storage located on the server.

6. System according to any of claims 1 to 5, wherein the processing means is a transaction interface processing separately from a client application.

7. System according to any of claims 1 to 6, wherein the transaction interface is capable of ensuring a parallel and consistent handling of client requests and the control queue.

8. System according to any of claims 1 to 7, wherein the transaction interface is directly used by the client application or called remotely.

9. Client application program for use in a client/server-based data processing system performing transactions between the clien application program and a server, comprising
processing means for setting up a connection to the at least second storage means in case of starting a transaction on the client side and quering the second data storage means for any previous transactions with the same unique identifier.

10. Application program according to claim 9, wherein the processing means is a transaction interface being part of the client application program.

11. A method of performing a transaction in a client/server-based data processing environment according to any of the preceding claims, comprising the steps of:
on the server side, storing current state information of a pending transaction in the at least second data storage means using a unique identifier for the at least one client, and
on the client side, setting up a connection to the at least second data storage means in case of starting a transaction and quering the second data storage means for any previous transactions with the same unique identifier.

12. Method according to claim 11, wherein, on the server side, continuously storing the current state information of a pending transaction in the at least second data storage means.

13. Method according to claim 11 or 12, comprising the particular steps of
initiating, on the client side, a transaction by delivering a first message to the server requesting the transaction;
delivering, on the client side, at least a second message to the server including session information comprising a unique message identifier for the first message;
storing, on the server side, at least the session information by using the unique message identifier; and
executing the transaction on the server side.

14. Method according to any of claims 11 to 13, comprising the further step of delivering, on the client side, at least a third message to the server committing the first and the at least second message and enabling the server starting the transaction based on the first and the at least second message, prior to executing the transaction on the server side.

15. Method according to any of claims 11 to 14, wherein quering the second data storage means results in a previous transaction, the unique identifier is used to retrieve a transaction response from the server.

16. A data processing program for execution in a data processing system comprising software code portions for performing a method according to any of claims 11 to 15.

17. A computer program product stored on a computer usable medium, comprising computer readable program means for causing a computer to perform a method according to any of claims 11 to 15.
